# EUROPEAN PATENT SPECIFICATION

(11) **EP 3 473 851 B1**
(45) Date of publication and mention of the grant of the patent: **10.03.2021**
(21) Application number: 18200695.7
(22) Date of filing: 16.10.2018
(51) Int. Cl.: F03D 7/04, F03D 1/02, F03D 7/02, F03D 9/25

(54) **WIND TURBINE GENERATOR**
WINDTURBINENGENERATOR
GÉNÉRATEUR DE TURBINE ÉOLIENNE

(30) Priority: 17.10.2017 JP 2017201092
(43) Date of publication of application: 24.04.2019
(73) Proprietor: Mitsubishi Heavy Industries, Ltd., Tokyo 108-8215 (JP)
(72) Inventor: YUGE, Atsushi, Tokyo, 108-8215 (JP)
(74) Representative: Henkel & Partner mbB

(56) References cited:
- EP-A1- 2 757 255
- EP-A2- 2 767 710
- WO-A1-2016/128002
- PARK JINKYOO ET AL: "A data-driven, cooperative wind farm control to maximize the total power production", APPLIED ENERGY, ELSEVIER SCIENCE PUBLISHERS, GB, vol. 165, 31 December 2015 (2015-12-31), pages 151-165, XP029400213, ISSN: 0306-2619, DOI: 10.1016/J.APENERGY.2015.11.064
- GEBRAAD P M O ET AL: "A data-driven model for wind plant power optimization by yaw control", 2015 AMERICAN CONTROL CONFERENCE (ACC), IEEE, 4 June 2014 (2014-06-04), pages 3128-3134, XP032621887, ISSN: 0743-1619, DOI: 10.1109/ACC.2014.6859118 [retrieved on 2014-07-17]

## Description

### BACKGROUND OF THE INVENTION

### 1. FIELD OF THE INVENTION

The present invention relates to a wind turbine generator, to a method of operating a wind turbine generator, and to a wind farm.

### 2. DESCRIPTION OF RELATED ART

In a wind turbine generator, while a configuration in which only one wind turbine part is installed for one tower part is generally known, a so-called multi-rotor wind turbine generator in which a plurality of wind turbine parts are installed for one tower part is also known. In the multi-rotor wind turbine generator, a total swept area of the wind turbine parts is increased, and an amount of generated power (output power) obtained from the one tower part is increased.

The PCT Publication WO 2017/108057 A1 and DE 102012020052 B each disclose a technology related to the multi-rotor wind turbine generator.

WO 2017/108057 A1 discloses the features of the preamble portion of claim 1.

### BRIEF SUMMARY OF THE INVENTION

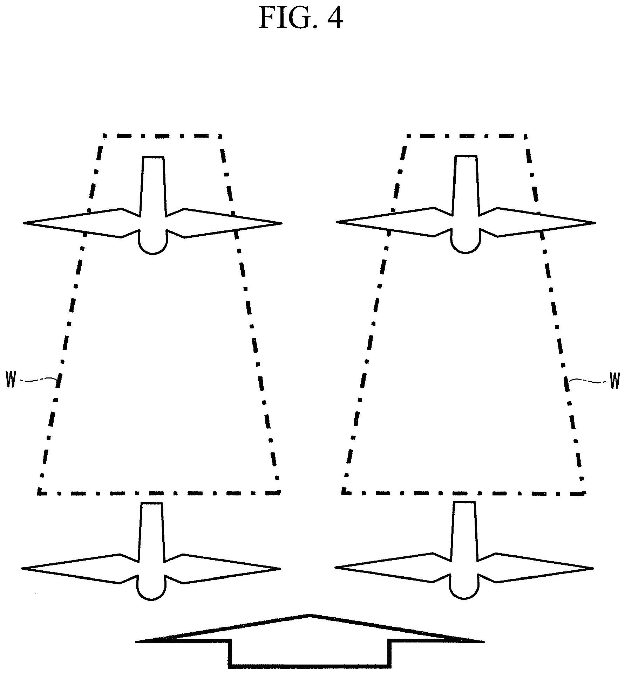

Not only one wind turbine generator is installed in a certain land, but also a large number of wind turbine generators are sometimes arranged in a lattice shape or in zigzag (wind farm). In this case, depending on the wind direction, second wind turbine generators are disposed on the leeward side of first wind turbine generators. As a result, as illustrated in FIG. 4, a flow of wind that passes through wind turbine parts of the first wind turbine generators, and has a reduced wind speed (so-called wake) is supplied to the second wind turbine generators disposed on the leeward side, so that there is a possibility that an amount of power generation in the second wind turbine generators is reduced (so-called wake loss).

In the wind farm, in order to suppress the wake loss, a distance between the first wind turbine generators and the second wind turbine generators needs to be set to be large.

The present invention has been made in view of such a circumstance, and an object of the present invention is to provide a wind turbine generator capable of suppressing reduction of a power generation amount of a wind turbine generator disposed on a downstream side.

In order to solve the above problem, a wind turbine generator of the present invention employs the features of claim 1, a wind farm employs the features of claim 2 and a method of operating a wind turbine generator employs the features of claim 3.

That is, a wind turbine generator according to the present invention is a wind turbine generator including: a tower part; a plurality of wind turbine parts each having a rotor, a blade provided to the rotor, and a generator that generates power by rotating force of the rotor; and a support member that is connected to the tower part and supports each of the wind turbine parts, wherein the plurality of wind turbine parts have a first wind turbine part and a second wind turbine part, and each of the first wind turbine part and the second wind turbine part is fixed or is configured to be set such that a yaw angle is oblique to a flow direction of wind received by the tower part.

According to this configuration, the plurality of wind turbine parts each have the rotor, the blade provided to the rotor, and the generator that generates power by rotating force of the rotor, and each wind turbine part is supported by the support member connected to the tower part. Consequently, the plurality of wind turbine parts are installed on the tower part through the support members. Therefore, each wind turbine part is disposed under environment in which wind conditions (wind conditions) are relatively similar, and receives wind blowing in the same direction to rotate and generate power.

Wind flows (hereinafter, referred to as "wakes") that pass through the wind turbine parts rotate the wind turbine parts, so that holding energy is reduced, and the wind speeds become slow. In this configuration, the first wind turbine part and the second wind turbine part are each set such that the yaw angle is oblique to the flow direction of the wind received by the tower part, and therefore the wake of each of the first wind turbine part and the second wind turbine part can be made to be the direction inclined to the flow direction of the wind received by the tower part.

For example, like a wind farm, in case where a large number of the wind turbine generators are regularly arranged in the wind flow direction, wakes of the wind turbine generators disposed on the windward side are supplied to the wind turbine generators disposed on the leeward side, so that a so-called wake loss that reduces the power generation amount of the wind turbine generators disposed on the leeward side may be generated. In the above configuration of the present invention, the wakes can be made to flow in the inclined direction, and therefore the wakes generated by the first wind turbine part and the second wind turbine part circulate at positions deviated from the centers of the first wind turbine part and the second wind turbine part of each wind turbine generator disposed on the leeward side. Then, the wakes are unlikely to be supplied to the first wind turbine part and the second wind turbine part on the leeward side. Consequently, it is possible to reduce influence on the wind turbine generators disposed on the leeward side by the wakes. Therefore, it is possible to suppress wake losses of the wind turbine generators disposed on the downstream side, and to suppress reduction of the power generation amount.

The wakes from the wind turbine generators disposed on the upstream side circulate at the positions deviated from the centers of the first wind turbine part and the second wind turbine part of each wind turbine generator disposed on the leeward side, and therefore it is possible to shorten a distance between the wind turbine generators disposed on the upstream side, and the wind turbine generators disposed on the downstream side. As a result, in the wind farm, it is possible to increase the number of the wind turbine generators per unit area. In the wind farm, the distance between the adjacent wind turbine generators is shortened, and therefore it is possible to shorten a movement distance at the time of installation, and to reduce installation cost. Additionally, the movement distance at the time of maintenance or the like is also shortened, and therefore it is possible to improve maintainability.

In the wind turbine generator according to the present invention, the first wind turbine part and the second wind turbine part are disposed so as to be aligned at substantially the same height. In the first wind turbine part, the yaw angle is fixed or is configured to be set to be oblique such that an inner end being an end, on a side close to the second wind turbine part, of the first wind turbine part is located on a wake side in the flow direction of the wind with respect to an outer end being an end on a side opposite to the inner end of the first wind turbine part. In the second wind turbine part, the yaw angle is fixed or is configured to be set to be oblique such that an inner end being an end, on a side close to the first wind turbine part, of the second wind turbine part is located on the wake side in the flow direction of the wind with respect to an outer end being an end on a side opposite to the inner end of the second wind turbine part.

In this configuration, in each of the first wind turbine part and the second wind turbine part, the yaw angle is set to be oblique such that the inner end is located on the wake side in the wind flow direction with respect to the outer end. That is, the first wind turbine part and the second wind turbine part are disposed so as to form the inverted V shape.

In a case where a deviation of each yaw angle with respect to the wind flow direction is caused (that is, in a case where each yaw angle is inclined with respect to the wind flow direction), the wake is drifted by the wind turbine part and inclined to flow in the direction of the end located on the wake side. In this configuration, the inner ends of the first wind turbine part and the second wind turbine part are located on the wake side, and therefore the wakes W of the first wind turbine part and the second wind turbine part are inclined to flow so as to approach each other.

The wakes are each generally kept in a state of a vortex right after passing through the wind turbine part. However, as each wake moves away from the wind turbine part 4, the vortex state is gradually dissolved to be brought into a disturbed state like turbulence. Like the above configuration, in a configuration in which the plurality of wind turbine parts are provided for the single tower part, the distance between the adjacent wind turbine parts is relatively shortened. Consequently, the wakes of the first wind turbine part and the second wind turbine part that are inclined to flow so as to approach each other come into collision with each other while maintaining the vortex state, and the vortexes of the wakes are mixed. Consequently, reduction of wake regions in the leeward direction can be expected. Therefore, it is possible to more suitably reduce influence on each wind turbine generator disposed on the leeward side by the wakes. Accordingly, it is possible to more suitably suppress wake losses of the wind turbine generators disposed on the downstream side, and to more suitably suppress reduction of the power generation amount.

According to the present invention, it is possible to suppress reduction of a power generation amount of a wind turbine generator disposed on a downstream side.

### BRIEF DESCRIPTION OF THE SEVERAL VIEWS OF THE DRAWINGS

FIG. 1 is a front view of a wind turbine generator according to an embodiment of the present invention;
FIG. 2 is a plan view schematically illustrating a wind turbine parts of a wind turbine generator of FIG. 1, and wind turbine part disposed on a downstream side of the wind turbine parts;
FIG. 3 is a diagram schematically illustrating a flow of wakes in a III-part of FIG. 2, and illustrates a state in which the two wakes are mixed; and
FIG. 4 is a plan view schematically illustrating a flow of wakes in a conventional technology.

### DETAILED DESCRIPTION OF THE INVENTION

Hereinafter, a wind turbine generator 1 according to an embodiment of the present invention will be described with reference to the drawings.

The wind turbine generator 1 according to this embodiment is a so-called up wind type wind turbine generator in which blades 8 are disposed on the windward side of a tower part 2 and nacelles 6.

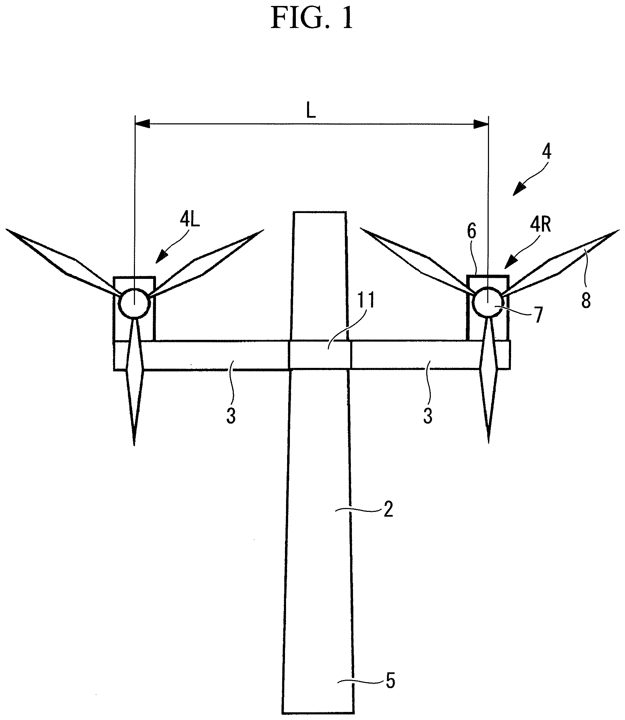

As illustrated in FIG. 1, the wind turbine generator 1 according to the embodiment of the present invention includes the single tower part 2, a plurality of support members 3 connected to the tower part 2, a wind turbine part 4 installed on each support member 3, and the like. The wind turbine generator 1 is interconnected in order to transmit generated power to a utility grid, and is installed on land or on the sea. Additionally, the wind turbine generators according to this embodiment are installed in a wind farm in which a large number of the wind turbine generators are arranged in a lattice shape or in zigzag.

The tower part 2 has a long structure in one direction, and a foundation part 5 of the tower part 2 is provided on an installation surface such that the axial direction is the direction perpendicular to the installation surface. The tower part 2 may be, for example, a columnar member, or may be constituted by combining a plurality of elongate members.

Each of the support members 3 is, for example, a member that is long in one direction, has a base part being one end side, the base part being connected to the tower part being the other side. In a case where the single wind turbine part 4 is installed on the single support member 3, the same number of the support members 3 as the wind turbine parts 4 are connected to the tower part 2. Each support member 3 may be an elongate member such as a columnar shape, or may be a member having a truss structure obtained by combining a plurality of members. Each support member 3 may be composed of an elongate member that mainly bears compressive force, a wire member that bears tensile force, and the like.

The wind turbine part 4 installed on each support member 3 has a nacelle 6, a rotor and a generator housed in the nacelle 6, a rotor head 7 installed on a tip of the rotor, and a plurality of (for example, three) blades 8 provided to the rotor head 7, and the like.

Each nacelle 6 is installed on an upper part or a lower part of the support member 3, and includes a rotor, a gear box, a generator, and the like therein. The rotor head 7 is provided on one end side of the nacelle 6. The rotor is rotatable around almost horizontal axis. On one end side the rotor is connected to the rotor head 7, and the other side of the rotor is directly connected to the generator, or is connected to the generator through the gear box or a hydraulic pump/hydraulic motor, for example. The generator drives by rotating force generated by rotation of the rotor around the axis, and generate power.

A plurality of the blades 8 are radially mounted on each rotor head 7. The plurality of blades 8 receives wind to rotate around the rotor. The blades 8 are connected to the rotor head 7 through a turning ring bearing for pitch control, and are rotatable round the blade axis extending in the blade length direction. Consequently, the pitch angles of the blades 8 are adjusted.

Each nacelle 6 turns on a substantially horizontal plane with respect to the support member 3, and the direction of the rotor head 7 is conformed to the wind direction, and a rotary surface or each blade 8 is made to face the wind direction. Turning of the nacelle 6 on the substantially horizontal plane is referred to as yaw (yaw) turning. The nacelle 6 turns through a yaw turning ring bearing connected to the nacelle 6 and the support member 3 (first yaw turning).

The support members 3 are each provided with a connecting part 11 connected to the tower part 2. The connecting part 11 is provided round the tower part 2, and has, for example, a ring shape. The support members 3 are each connected to the tower part 2 through the connecting part 11 of the support member 3. The tower part 2 receives a load transmitted from each support member 3, only through the connecting part 11, and does not receive any load transmitted from each support member 3. The connecting part 11 includes a bearing structure and the like, and has a constitution of being rotatable around the tower part 2 in a substantially horizontal plane.

Consequently, the connecting part 11 is rotatable around the tower part 2 in the substantially horizontal plane, and therefore each wind turbine part 4 supported by the support member 3 connected to the connecting part 11 rotates round the tower part 2 in the horizontal plane, and can perform yaw (yaw) turning (second yaw turning).

The wind turbine generator 1 according to this embodiment has two wind turbine parts 4, namely a first wind turbine part 4R and a second wind turbine part 4L. The first wind turbine part 4R and the second wind turbine part 4L are disposed so as to be aligned at substantially the same height with the tower part 2 therebetween. The first wind turbine part 4R and the second wind turbine part 4L are disposed away from each other by a predetermined distance L.

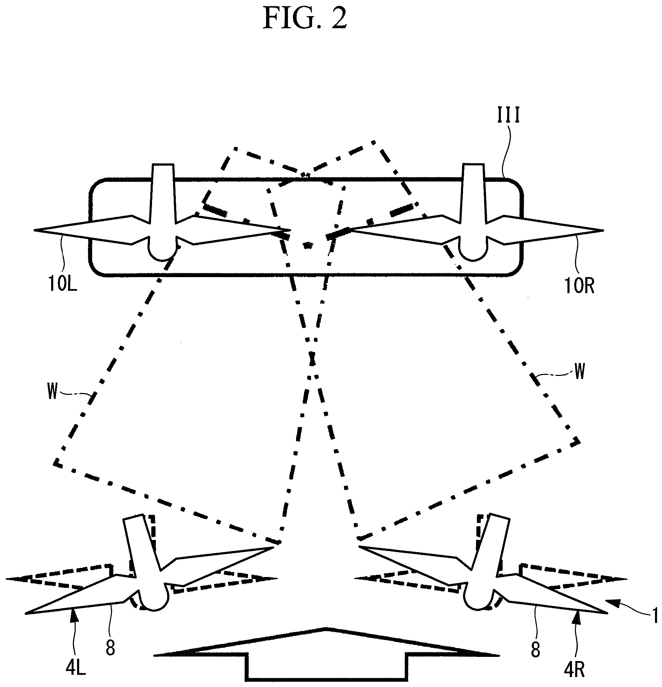

As illustrated in FIG. 2, in the first wind turbine part 4R, by turning of the nacelle 6 at the time of power generation, the yaw angle can be set to be oblique such that an inner end being an end, on a side close to the second wind turbine part 4L, of the first wind turbine part 4R is located on a wake side in the wind flow direction (refer to the arrow of FIG. 2) with respect to an outer end being an end on a side opposite to the inner end of the first wind turbine part 4R. Thus, by the first yaw turning, the first wind turbine part 4R can be independently set such that the yaw angle is oblique.

In the second wind turbine part 4L, by turning of the nacelle 6 or rotation of the connecting part 11 at the time of power generation, the yaw angle can be set to be oblique such that an inner end being an end, on a side close to the first wind turbine part 4R, of the second wind turbine part 4L is located on the wake side in the wind flow direction with respect to an outer end being an end on a side opposite to the inner end of the second wind turbine part 4L. Thus, by the first yaw turning, the second wind turbine part 4L can be independently set such that the yaw angle is oblique.

That is, the first wind turbine part 4R and the second wind turbine part 4L can be disposed to form an inverted V shape. The wind turbine parts illustrated by broken lines in FIG. 2 are wind turbine parts that are not inclined with respect to the wind flow direction.

The first wind turbine part 4R and the second wind turbine part 4L rotate in the same direction.

According to this embodiment, the following effects and operation are produced.

In this embodiment, the plurality of wind turbine parts 4 (the first wind turbine part 4R and the second wind turbine part 4L) each have the rotor, the blades 8 provided to the rotor, the generator that generates power by rotating force of the rotor, and each wind turbine part 4 is supported by the support member 3 connected to the tower part 2. Consequently, the plurality of wind turbine parts 4 are installed on the tower part 2 through the support members 3. Therefore, each wind turbine part 4 is disposed under environment in which wind conditions (wind conditions) are relatively similar, and receives wind blowing in the same direction to rotate and generate power.

Wind flows W (hereinafter, referred to as "wakes") that pass through the first wind turbine part 4R and the second wind turbine part 4L rotate the first wind turbine part 4R and the second wind turbine part 4L, so that holding energy is reduced, and the wind speeds become slow. In this embodiment, the first wind turbine part 4R and the second wind turbine part 4L can be each set such that the yaw angle is oblique to the flow direction of the wind received by the tower part 2, and therefore the wake W of each of the first wind turbine part 4R and the second wind turbine part 4L can be made to be the direction inclined to the wind flow direction (refer to FIG. 2).

The wind turbine generators 1 of this embodiment are provided in a wind farm in which a large number of the wind turbine generators 1 are regularly disposed to be aligned in the wind flow direction. Therefore, in a configuration in which wind turbine parts are not inclined, as illustrated in FIG. 4, wakes W that pass through the wind turbine parts of the wind turbine generators disposed on the windward side, and that have reduced wind speeds are supplied to a first wind turbine part and a second wind turbine part of each wind turbine generator disposed on the leeward side, so that a so-called wake loss that reduces the power generation amount of the wind turbine generators disposed on the leeward side may be generated. In this embodiment, as illustrated in FIG. 2, the wakes W can be made to flow in the inclined direction, and therefore the wakes W generated by the first wind turbine part 4R and the second wind turbine part 4L circulate at positions deviated from the centers of a first wind turbine part 10R and a second wind turbine part 10L of each wind turbine generator disposed on the leeward side, and the wakes W are unlikely to be supplied to the first wind turbine part 10R and the second wind turbine part 10L of each wind turbine generator on the leeward side. Consequently, it is possible to reduce influence on the wind turbine generator disposed on the leeward side by the wakes W. Therefore, it is possible to suppress wake losses of the wind turbine generators disposed on the downstream side, and to suppress reduction of the power generation amount.

In this embodiment, in each of the first wind turbine part 4R and the second wind turbine part 4L, the yaw angle can be set to be oblique such that the inner end is located on the wake side in the wind flow direction with respect to the outer end. That is, the first wind turbine part 4R and the second wind turbine part 4L can be disposed so as to form the inverted V shape.

In a case where a deviation of each yaw angle with respect to the wind flow direction is caused (that is, in a case where each yaw angle is inclined with respect to the wind flow direction), the wake is drifted by the wind turbine part and inclined to flow in the direction of the end located on the wake side. In this embodiment, the inner ends of the first wind turbine part 4R and the second wind turbine part 4L are located on the wake side, and therefore the wakes W of the first wind turbine part 4R and the second wind turbine part 4L are inclined to flow so as to approach each other, as illustrated in FIG. 2.

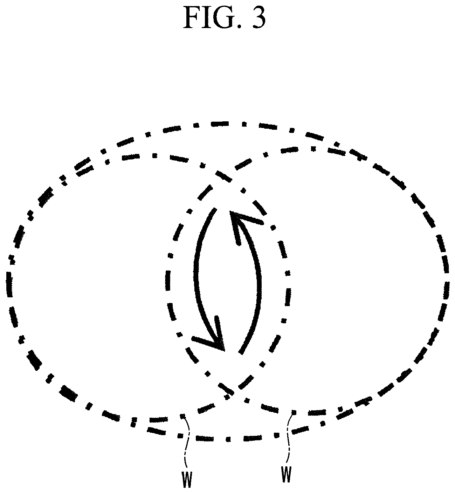

The wakes W are each generally kept in a state of a vortex right after passing through the wind turbine part 4. However, as each wake W moves away from the wind turbine part 4, the vortex state is gradually dissolved to be brought into a disturbed state like turbulence. Like this embodiment, in a configuration in which the plurality of wind turbine parts (the first wind turbine part 4R and the second wind turbine part 4L) are provided for the single tower part 2, the distance L (refer to FIG. 1) between the adjacent wind turbine parts 4 is relatively shortened. Consequently, the wakes W of the first wind turbine part 4R and the second wind turbine part 4L that are inclined to flow so as to approach each other come into collision while maintaining the vortex state, and the vortexes of the wakes W are mixed (refer to FIG. 3). When the vortexes are mixed, collapse of the vortexes is accelerated, and therefore recovery of kinetic energy becomes fast. As a result, it is possible to more suitably reduce influence on the first wind turbine part 10R and the second wind turbine part 10L of each wind turbine generator disposed on the leeward side by the wakes W. Accordingly, it is possible to more suitably suppress wake losses of the wind turbine generators disposed on the downstream side, and to more suitably suppress reduction of the power generation amount.

In this embodiment, the first wind turbine part 4R and the second wind turbine part 4L rotate in the same direction. Therefore, the wake W of the first wind turbine part 4R and the wake W of the second wind turbine part 4L are mixed, so that collapse of the vortexes are accelerated, and therefore recovery of kinetic energy in the main flow direction becomes faster compared to a case where the wakes W are not mixed. Accordingly, it is possible to more suitably reduce influence on the first wind turbine part 10R and the second wind turbine part 10L of each wind turbine generator disposed on the leeward side by the wakes W.

In this embodiment, it is possible to reduce influence on the first wind turbine part 10R and the second wind turbine part 10L of each wind turbine generator disposed on the leeward side by the wakes W, and therefore it is possible to shorten a distance between the wind turbine generator 1 disposed on the upstream side, and the wind turbine generator disposed on the downstream side. Therefore, in the wind farm, it is possible to increase the number of the wind turbine generators per unit area. In the wind farm, the distance between the adjacent wind turbine generators is shortened, and therefore it is possible to shorten a movement distance at the time of installation, and to reduce installation cost. Additionally, the movement distance at the time of maintenance or the like is also shortened, and therefore it is possible to improve maintainability.

For example, in the above embodiment, the nacelles 6 are turned, so that the first wind turbine part 4R and the second wind turbine part 4L are inclined with respect to the wind flow direction. However, the present invention is not limited to this. In a configuration where the nacelles 6 do not turn, the first wind turbine part 4R and the second wind turbine part 4L may be fixed so as to make the yaw angles oblique such that the inner ends are located on the wake side in the wind flow direction with respect to the outer ends.

In this embodiment, the wind turbine generators are provided in the wind farm. However, the present invention is not limited to a case where the present invention is applied to a large scale facility like the wind farm. In any situation in which the two wind turbine generators are installed so as to be aligned, effects of the present invention are produced.

### REFERENCE SIGNS LIST

- 1: Wind turbine generator
- 2: Tower part
- 3: Support member
- 4: Wind turbine part
- 4R: First wind turbine part
- 4L: Second wind turbine part
- 5: Foundation part
- 6: Nacelle
- 7: Rotor head
- 8: Blade
- 11: Connecting part

## Claims

1. A wind turbine generator (1) comprising:
a tower part (2);
a plurality of wind turbine parts (4) each having a rotor, a blade (8) provided to the rotor, and a generator that is configured to generate power by rotating force of the rotor; and
a support member (3) that is connected to the tower part (2) and supports each of the wind turbine parts (4), wherein
the plurality of wind turbine parts (4) have a first wind turbine part (4R), and a second wind turbine part (4L) disposed so as to be aligned at substantially the same height as the first wind turbine part (4R),
**characterized in that**
each of the first wind turbine part (4R) and the second wind turbine part (4L) is fixed such or is configured to be set such that a yaw angle is oblique to a flow direction of wind received by the tower part (2), and
in the first wind turbine part (4R), the yaw angle is fixed or configured to be set to be oblique such that an inner end being an end, on a side close to the second wind turbine part (4L), of the first wind turbine part (4R) is located on a wake side in the flow direction of the wind with respect to an outer end being an end on a side opposite to the inner end of the first wind turbine part (4R), and
in the second wind turbine part (4L), the yaw angle is fixed or configured to be set to be oblique such that an inner end being an end, on a side close to the first wind turbine part (4R), of the second wind turbine part (4L) is located on the wake side in the flow direction of the wind with respect to an outer end being an end on a side opposite to the inner end of the second wind turbine part (4L).

2. A wind farm comprising
a plurality of wind turbine generators (1) according to claim 1 regularly disposed to be aligned in a wind flow direction,
wherein each of the first wind turbine part (4R) and the second wind turbine part (4L) of a first wind turbine generator (1) of the plurality of wind turbine generators (1) is fixed such or is set such that the yaw angle is oblique to the flow direction of the wind received by the tower part (2) of the first wind turbine generator (1) so that the wakes (W) generated, in operation, by the first wind turbine part (4R) and the second wind turbine part (4L) circulate at positions deviated from centers of a first wind turbine part (10R) and a second wind turbine part (10L) of a second wind turbine generator (1) of the plurality of wind turbine generators (1) disposed on the leeward side of the first wind turbine generator (1).

3. A method of operating a wind turbine generator (1) comprising:
a tower part (2);
a plurality of wind turbine parts (4) each having a rotor, a blade (8) provided to the rotor, and a generator that is configured to generate power by rotating force of the rotor; and
a support member (3) that is connected to the tower part (2) and supports each of the wind turbine parts (4),
wherein the plurality of wind turbine parts (4) have a first wind turbine part (4R), and a second wind turbine part (4L) disposed so as to be aligned at substantially the same height as the first wind turbine part (4R), and
wherein the method comprises:
setting each of the first wind turbine part (4R) and the second wind turbine part (4L) is such that a yaw angle is oblique to a flow direction of wind received by the tower part (2), and
in the first wind turbine part (4R), the yaw angle is set to be oblique such that an inner end being an end, on a side close to the second wind turbine part (4L), of the first wind turbine part (4R) is located on a wake side in the flow direction of the wind with respect to an outer end being an end on a side opposite to the inner end of the first wind turbine part (4R), and
in the second wind turbine part (4L), the yaw angle is set to be oblique such that an inner end being an end, on a side close to the first wind turbine part (4R), of the second wind turbine part (4L) is located on the wake side in the flow direction of the wind with respect to an outer end being an end on a side opposite to the inner end of the second wind turbine part (4L).

## Patentansprüche

1. Ein Windturbinengenerator (1), umfassend:
einem Turmteil (2),
eine Vielzahl von Windturbinenteilen (4), die jeweils einen Rotor, ein Blatt (8), das an dem Rotor vorgesehen ist, und einen Generator aufweisen, der konfiguriert ist, um durch eine Drehkraft des Rotors Strom zu erzeugen, und
ein Tragelement (3), das mit dem Turmteil (2) verbunden ist und jedes der Windturbinenteile (4) trägt, wobei
die Vielzahl der Windturbinenteile (4) einen ersten Windturbinenteil (4R) und einen zweiten Windturbinenteil (4L) aufweisen, der so angeordnet ist, dass er im Wesentlichen auf der gleichen Höhe wie der erste Windturbinenteil (4R) ausgerichtet ist,
**dadurch gekennzeichnet, dass**
sowohl der erste Windturbinenteil (4R) als auch der zweite Windturbinenteil (4L) so fixiert ist oder konfiguriert ist, um so eingestellt zu werden, dass ein Gierwinkel schräg zu einer Strömungsrichtung des Windes ist, der von dem Turmteil (2) empfangen wird, und
in dem ersten Windturbinenteil (4R) der Gierwinkel fixiert ist oder konfiguriert ist, um so eingestellt zu werden, dass er schräg ist, so dass ein inneres Ende, das ein Ende des ersten Windturbinenteils (4R) an einer Seite nahe dem zweiten Windturbinenteil (4L) ist, auf einer Nachlaufseite in der Strömungsrichtung des Windes in Bezug auf ein äußeres Ende, das ein Ende an einer Seite gegenüber dem inneren Ende des ersten Windturbinenteils (4R) ist, angeordnet ist, und
in dem zweiten Windturbinenteil (4L) der Gierwinkel fixiert ist oder konfiguriert ist, um schräg eingestellt zu werden, so dass ein inneres Ende, das ein Ende des zweiten Windturbinenteils (4L) auf einer Seite nahe dem ersten Windturbinenteil (4R) ist, auf der Nachlaufseite in der Strömungsrichtung des Windes in Bezug auf ein äußeres Ende, das ein Ende an einer Seite gegenüber dem inneren Ende des zweiten Windturbinenteils (4L) ist, angeordnet ist.

2. Ein Windpark mit
Einer Vielzahl von Windturbinengeneratoren (1) nach Anspruch 1, die regelmäßig so angeordnet sind, dass sie in einer Windströmungsrichtung ausgerichtet sind,
wobei sowohl der erste Windturbinenteil (4R) als auch der zweite Windturbinenteil (4L) eines ersten Windturbinengenerators (1) der Vielzahl von Windturbinengeneratoren (1) so fixiert ist oder so eingestellt ist, dass der Gierwinkel schräg zur Strömungsrichtung des Windes ist, der durch den Turmteil (2) des ersten Windturbinengenerators (1) empfangen wird, so dass die im Betrieb durch den ersten Windturbinenteil (4R) und den zweiten Windturbinenteil (4L) erzeugten Nachläufe (W) an Positionen zirkulieren, die von den Mittelpunkten eines ersten Windturbinenteils (10R) und eines zweiten Windturbinenteils (10L) eines zweiten Windturbinengenerators (1) der Vielzahl von Windturbinengeneratoren (1), die auf der Leeseite des ersten Windturbinengenerators (1) angeordnet sind, abweichen.

3. Ein Verfahren zum Betreiben eines Windturbinengenerators (1), der umfasst:
einen Turmteil (2);
eine Vielzahl von Windturbinenteilen (4), die jeweils einen Rotor, ein Blatt (8), das an dem Rotor vorgesehen ist, und einen Generator aufweisen, der so konfiguriert ist, dass er durch eine Drehkraft des Rotors Strom erzeugt, und
ein Tragelement (3), das mit dem Turmteil (2) verbunden ist und jedes der Windturbinenteile (4) trägt,
wobei die Vielzahl von Windturbinenteilen (4) einen ersten Windturbinenteil (4R) und einen zweiten Windturbinenteil (4L) aufweisen, der so angeordnet ist, dass er im Wesentlichen auf der gleichen Höhe wie der erste Windturbinenteil (4R) ausgerichtet ist, und
wobei das Verfahren umfasst:
Einstellen sowohl des ersten Windturbinenteils (4R) als auch des zweiten Windturbinenteils (4L) derart, dass ein Gierwinkel schräg zu einer Strömungsrichtung des Windes ist, der von dem Turmteil (2) empfangen wird, und
wobei in dem ersten Windturbinenteil (4R) der Gierwinkel schräg eingestellt wird, so dass ein inneres Ende, das ein Ende des ersten Windturbinenteils (4R) an einer Seite nahe dem zweiten Windturbinenteil (4L) ist, auf einer Nachlaufseite in der Strömungsrichtung des Windes in Bezug auf ein äußeres Ende, das ein Ende an einer Seite gegenüber dem inneren Ende des ersten Windturbinenteils (4R) ist, angeordnet ist, und
wobei in dem zweiten Windturbinenteil (4L) der Gierwinkel schräg eingestellt wird, so dass ein inneres Ende, das ein Ende des zweiten Windturbinenteils (4L) an einer Seite nahe dem ersten Windturbinenteil (4R) ist, auf der Nachlaufseite in der Strömungsrichtung des Windes in Bezug auf ein äußeres Ende, das ein Ende an einer Seite gegenüber dem inneren Ende des zweiten Windturbinenteils (4L) ist, angeordnet ist.

## Revendications

1. Générateur (1) de turbine éolienne comportant :
une partie (2) de tour ;
une pluralité de parties (4) de turbine éolienne, chacune ayant une roue, une pale (8) montée sur la roue, et un générateur qui est configuré pour produire de l'électricité par la force de rotation de la roue ; et
un élément (3) de support qui est relié à la partie (2) de tour et supporte chacune des parties (4) de turbine éolienne, dans lequel
la pluralité de parties (4) de turbine éolienne a une première partie (4R) de turbine éolienne et une deuxième partie (4L) de turbine éolienne montée de manière à être alignée à sensiblement la même hauteur que la première partie (4R) de turbine éolienne,
**caractérisé en ce que**
chacune de la première partie (4R) de turbine éolienne et de la deuxième partie (4L) de turbine éolienne est fixée ou configurée pour être réglée de manière à ce qu'un angle de lacet soit oblique à une direction du flux du vent reçue par la partie (2) de tour, et
dans la première partie (4R) de turbine éolienne, l'angle de lacet est fixé ou configuré pour être réglé oblique de manière à ce qu'une extrémité intérieure étant une extrémité, d'un côté proche de la deuxième partie (4L) de turbine éolienne, de la première partie (4R) de turbine éolienne soit placée d'un côté de sillage dans la direction du flux du vent par rapport à une extrémité extérieure étant une extrémité du côté opposé à l'extrémité intérieure de la première partie (4R) de turbine éolienne, et
dans la deuxième partie (4L) de turbine éolienne, l'angle de lacet est fixé ou configuré pour être réglé pour être oblique de manière à ce qu'une extrémité intérieure étant une extrémité, d'un côté proche de la première partie (4R) de turbine éolienne, de la deuxième partie (4L) de turbine éolienne soit placée du côté de sillage dans la direction du flux du vent par rapport à une extrémité extérieure étant une extrémité d'un côté opposé à l'extrémité intérieure de la deuxième partie (4L) de turbine éolienne.

2. Parc éolien comportant
une pluralité de générateurs (1) de turbine éolienne suivant la revendication 1, placés régulièrement pour être alignés dans une direction de flux du vent,
dans lequel chacune de la première partie (4R) de turbine éolienne et de la deuxième partie (4L) de turbine éolienne d'un premier générateur (1) de turbine éolienne d'une pluralité de générateurs (1) de turbine éolienne est fixée ou réglée de manière à ce que l'angle de lacet soit oblique à la direction du flux du vent reçu par la partie (2) de tour du premier générateur (1) de turbine éolienne de manière à ce que les sillages (W) produits, en fonctionnement? par la première partie (4R) de turbine éolienne et par la deuxième partie (4L) de turbine éolienne circulent en des positions déviées des centres d'une première partie (10R) de turbine éolienne et d'une deuxième partie (10L) de turbine éolienne d'un deuxième générateur (1) de turbine éolienne d'une pluralité de générateurs (1) de turbine éolienne placés du côté sous le vent du premier générateur (1) de turbine éolienne.

3. Procédé d'utilisation d'un générateur (1) de turbine éolienne comprenant :
une partie (2) de tour ;
une pluralité de parties (4) de turbine éolienne, chacune ayant une roue, une pale (8) montée sur la roue, et un générateur qui est configuré pour produire de l'électricité par la force de rotation de la roue ; et
un élément (3) de support qui est relié à la partie (2) de tour et supporte chacune des parties (4) de turbine éolienne,
dans lequel la pluralité de parties (4) de turbine éolienne a une première partie (4R) de turbine éolienne et une deuxième partie (4L) de turbine éolienne montée de manière à être alignée à sensiblement la même hauteur que la première partie (4R) de turbine éolienne, et
dans lequel le procédé comprend :
régler chacune de la première partie (4R) de turbine éolienne et de la deuxième partie (4L) de turbine éolienne de manière à ce qu'un angle de lacet soit oblique à une direction de flux du vent reçu par la partie (2) de tour, et
dans la première partie (4R) de turbine éolienne, l'angle de lacet est réglé pour être oblique de manière à ce qu'une extrémité intérieure étant une extrémité, d'un côté proche de la deuxième partie (4L) de turbine éolienne, de la première partie (4R) de turbine éolienne soit placée d'un côté de sillage de la direction du flux du vent par rapport à une extrémité extérieure étant une extrémité d'un côté opposé à l'extrémité intérieure de la première partie (4R) de turbine éolienne, et
dans la deuxième partie (4L) de turbine éolienne, l'angle de lacet est réglé pour être oblique de manière à ce qu'une extrémité intérieure étant une extrémité, d'un côté proche de la première partie (4R) de turbine éolienne, de la deuxième partie (4L) de turbine éolienne soit placée sur le côté de sillage dans la direction du flux de l'air par rapport à une extrémité extérieure étant une extrémité d'un côté opposé à l'extrémité intérieure de la deuxième partie (4L) de turbine éolienne.
